# EUROPÄISCHE PATENTSCHRIFT

(11) **EP 2 087 992 B1**
(45) Veröffentlichungstag und Bekanntmachung des Hinweises auf die Patenterteilung: **14.12.2011**
(21) Anmeldenummer: 09000692.5
(22) Anmeldetag: 20.01.2009
(51) Int. Cl.: B31B 19/64, B31B 23/00, B65B 41/18, B65B 43/04, B65B 51/30, B29C 65/00, B29C 65/18

(54) **Verfahren und Vorrichtung zum Herstellen von (Tabak-)Beuteln**
Device and method for manufacturing (tobacco) bags
Procédé et dispositif de fabrication de sachets (de tabac)

(30) Priorität: 05.02.2008 DE 102008007752
(43) Veröffentlichungstag der Anmeldung: 12.08.2009
(60) Teilanmeldung: 11008778.0
(73) Patentinhaber: Focke & Co. (GmbH & Co. KG), 27283 Verden (DE)
(72) Erfinder: Beckmann, Frank, 21521 Aumühle (DE); Storcks, Andreas, 22087 Hamburg (DE); Roesler, Burkard, 27337 Blender (DE)
(74) Vertreter: Bolte, Erich

(56) Entgegenhaltungen:
- DE-A1- 3 446 409
- US-A- 4 128 049
- US-A- 4 714 454
- US-A1- 2005 022 476
- US-B1- 6 761 016

## Beschreibung

Die Erfindung betrifft eine Vorrichtung zum Herstellen von Tabak-Beuteln mit den Merkmalen des Oberbegriffs des Anspruchs 1,

Derartige Beutel sind überwiegend als Wickel-Beutel ausgeführt. Die Wickellasche wird um die Tasche herum gelegt und mittels Tape fixiert. Die Öffnung der Tasche ist mit einer Verschlussnaht versehen, die bei erstmaliger Ingebrauchnahme geöffnet wird.

Bei einer bekannten Vorrichtung (DE 34 46 409 A1) wird die Folienbahn von einer Bobine mit horizontaler Drehachse abgezogen und während der Bildung eines fortlaufenden Bahnschenkels in eine aufrechte Ebene geführt. Die vorbereitete Folienbahn wird demnach in horizontaler Richtung transportiert, und zwar in einer vertikalen Ebene. Im Bereich einer Siegelstation werden gleichzeitig drei quergerichtete, aufrechte Verbindungsnähte im Bereich des Bahnschenkels angebracht. Die Folienbahn wird sodann einem um eine vertikale Achse drehenden Revolver zugeführt. Vor Übergabe an den Revolver werden die Beutel von der Bahn abgetrennt. Der Revolver ist längs des Umfangs mit Aufnahmen versehen, die je einen Beutel aufnehmen und in vertikaler Ebene durch mehrere Bearbeitungsstation transportieren.

Weiterhin ist eine Beutelherstellmaschine bekannt, bei der die Herstellung, Befüllung und der Verschluss der Beutel In vertikaler Ebene ablaufen (US 6 761 016 B1). Die Beutel werden aus zwei Folienbahnen gefertigt, die an gegenüberliegenden Seiten der Vorrichtung dieser zugeführt und Im Bereich einer vertikalen, abwärts gerichteten Förderstrecke vereinigt werden. Die beiden Bahnen werden durch in Längsrichtung verlaufende Nähte miteinander verbunden, gefüllt und sodann mittels quergerichteter Siegelnähte verschlossen und zugleich von der Bahn abgetrennt. Mit jedem Arbeitstakt werden demnach mehrere nebeneinander liegende, fertige Beutel hergestellt, die durch Abtrennen von der Bahn nach unten fallen. Für die Herstellung der quergerichteten Siegelnähte ist ein Siegelaggregat mit mehreren bewegbaren Siegelbacken vorgesehen, von denen jeweils zwei einander gegenüberliegende Siegelbacken gleichzeitig wirksam werden.

Auch ein weiterer bekannter Beutelpacker gemäß US 2005/0022476 A1 arbeitet in vertikaler Ebene. Auch bei dieser bekannten Technologie werden zwei Folienbahnen zusammengeführt und - nach Einfüllen von flüssigem Packungsinhalt - durch in Förderrichtung wirkende Siegelorgane bzw. Siegelwalzen und nachfolgend durch quergerichtete Siegelbacken miteinander verbunden. Die Organe zum Anbringen quergerichteter Siegelnähte sind bewegbar ausgebildet, laufen mit der den Inhalt aufweisenden zweilagigen Bahn in Abwärtsrichtung, wobei während einer Bewegungsphase mehrere, nämlich vier Paare von quergerichteten Siegelbacken zusammenwirken und durchgehende, quergerichtete Siegelnähte anbringen. Es entsteht so eine Beutelbahn mit rasterartig angeordneten, gefüllten Beuteln.

Der Erfindung liegt die Aufgabe zugrunde, einen Beutelpacker gemäß Oberbegriff des Anspruchs 1 hinsichtlich der Leistungsfähigkeit und Zuverlässigkeit, insbesondere aber zur Erzielung eines kompakten Aufbaus weiterzuentwickeln.

Zur Lösung dieser Aufgabe ist die Vorrichtung mit den Merkmalen des kennzeichnenden Teils des Anspruchs 1 ausgebildet.

Im Kern ist demnach vorgesehen, dass die bei einem Tabak-Beutel herzustellenden Siegelnähte im Bereich des Bahnschenkel im Bereich einer vertikal ausgerichteten Siegelstation durchgeführt werden, durch die die Bahn in vertikaler Richtung hindurchläuft. Die Herstellung der einzelnen (ungefüllten) Beutel im Anschluss an die Siegelstation soll aber mit Rücksicht auf eine optimale Arbeitsweise der Trennvorrichtung in horizontaler Ebene stattfinden.

Weitere Merkmale der Erfindung beziehen sich auf die Ausbildung der Siegelstation, insbesondere auf die Anordnung von Siegelorganen und deren Arbeitsweise.

Weitere Einzelheiten der Erfindung werden nachfolgend anhand der Zeichnungen näher erläutert. Es zeigt:
- Fig. 1: einen (Tabak-)Beutel in Schließstellung bei perspektivischer Darstellung,
- Fig. 2: einen Abschnitt einer (Folien-)Bahn zum Herstellen von Beuteln gemäß Fig. 1, ebenfalls perspektivisch,
- Fig. 3: eine Anlage zum Herstellen, Füllen und Verschließen von (Tabak-)Beuteln in vereinfachter, perspektivischer Darstellung,
- Fig. 4: die Vorrichtung gemäß Fig. 3 in einer Queransicht gemäß Pfeil IV in Fig. 3,
- Fig. 5: eine Seitenansicht der Vorrichtung gemäß Pfeil V in Fig. 3,
- Fig. 6: ein Detail einer Siegelstation in vergrößertem Maßstab,
- Fig. 7: eine Einzelheit entsprechend Fig. 6 eines anderen Ausführungsbeispiels,
- Fig. 8: eine Darstellung analog Fig. 5 einer anderen Ausführungsform der Siegelsta- tion,
- Fig. 9: eine Queransicht bzw. Draufsicht der Siegelstation gemäß Pfeil IX in Fig. 8,
- Fig. 10: eine Darstellung analog Fig. 5, Fig. 8 für ein weiteres Ausführungsbeispiel der Siegelstation,
- Fig. 11: einen Ausschnitt XI der Siegelstation in Fig. 8, bei vergrößertem Maßstab,
- Fig. 12: die Einzelheit gemäß Fig. 11 bei veränderter Stellung von Organen,
- Fig. 13: die Einzelheit gemäß Fig. 11, Fig. 12 in nochmals veränderter Position von Organen.

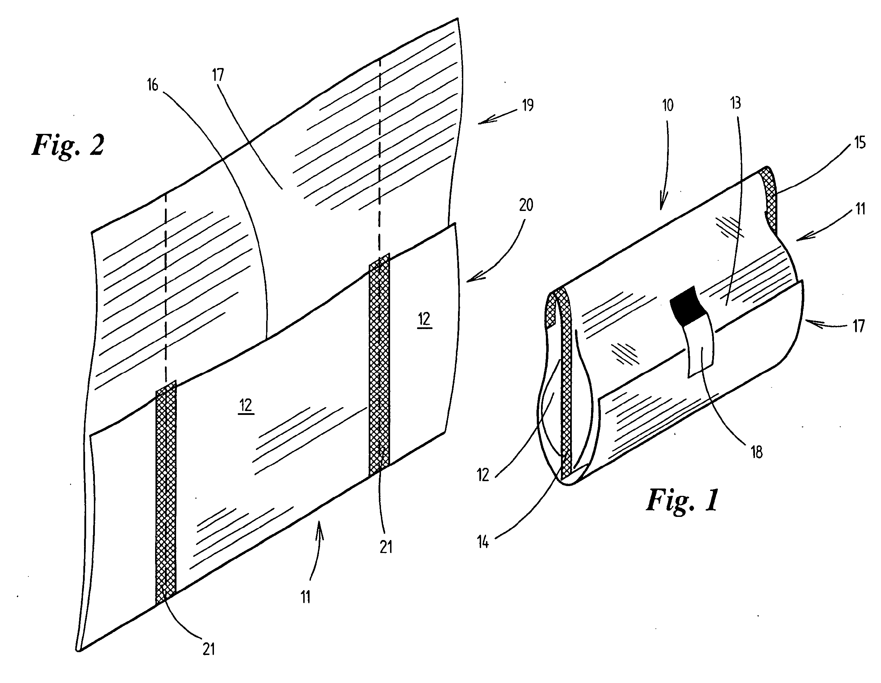

Fig. 1 zeigt ein Beispiel für einen Beutel 10 aus dünnem Verpackungsmaterial, insbesondere aus (thermisch siegelbarer bzw. schweißbarer) Folie. Der Beutel 10 besteht aus einem einstückigen, im Wesentlichen rechteckigen, langgestreckten Zuschnitt, der aufgrund entsprechender Faltung eine Tasche 11 bildet für den Packungsinhalt. Die Tasche 11 ist durch eine Taschen-Vorderwand 12 und eine Taschen-Rückwand 13 begrenzt, die durch Seitennähte 14, 15 miteinander verbunden sind. Eine Öffnung 16 dient zum Befüllen der Tasche 11 und zur Entnahme des Inhalts. Die Taschen-Rückwand 13 ist über die Öffnung 16 hinaus verlängert und bildet eine Verschlusslasche bzw. eine Wickellasche 17. Diese ist gemäß Fig. 1 bei gefüllter und durch einen Verschlussstreifen geschlossener Öffnung 16 um die Tasche herumgefaltet, derart, dass ein Endbereich der Wickellasche 17 an der Taschen-Rückwand 13 anliegt und an dieser mittels Tape 18 lösbar fixiert ist.

Die Beutel 10 werden durch Abtrennen von einer fortlaufenden Bahn 19 aus Folie oder anderem geeigneten Verpackungsmaterial gewonnen. Die Bahn 19 wird während fortlaufenden Transports in Längsrichtung gefaltet unter Bildung eines Bahnschenkels 20. Dieser definiert die Tasche 11. Durch quergerichtete Verbindungsnähte 21 wird der Bahnschenkel 20 an der Bahn 19 fixiert. Ein quergerichteter Trennschnitt wird mittig im Bereich der Verbindungsnähte 21 ausgeführt, sodass komplette Beutel 10 entstehen. Die Verbindungsnaht 21 hat die doppelte Breite einer Seitennaht 14, 15.

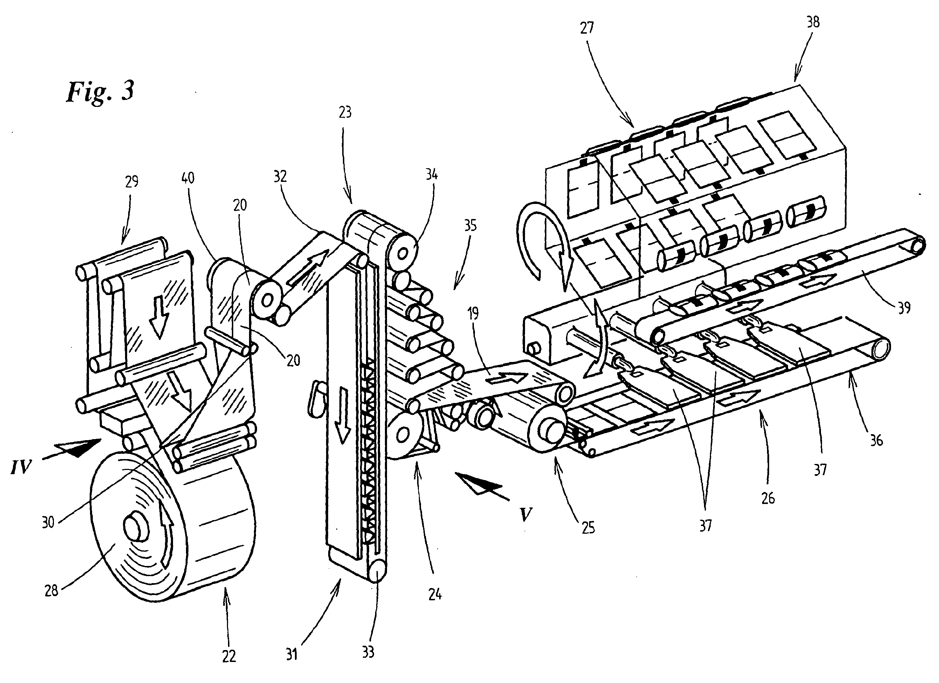

Die Herstellung und Weiterverarbeitung der Beutel 10 erfolgt in einer kompakten, leistungsfähigen Vorrichtung gemäß Fig. 3. Diese weist mehrere Stationen auf, nämlich eine Folienstation 22, eine Siegelstation 23, eine Tapestation 24, eine Trennstation 25, eine Übergabestation 26 und eine Füll- und Verschließstation 27. Die Organe bzw. Aggregate der einzelnen Stationen sind in einer funktional sowie hinsichtlich der Platzbedarfs optimalen Konfiguration angeordnet. In der Folienstation 22 ist eine Bobine 28 für die Folienbahn 19 mit horizontaler Achse positioniert, die sich in der Hauptförderrichtung erstreckt. Die Bahn 19 wird demnach quer zu dieser Förderrichtung von der Bobine 28 abgezogen und über ein erstes Ausgleichspendel 29 in den Bereich eines Faltorgans 30 geführt. Dieses ist so angeordnet zwischen Umlenkwalzen, dass während des Transports durch Umfalten der fortlaufende Bahnschenkel 20 gebildet und zugleich die so vorbereitete Bahn 19 in die Hauptförderrichtung umgelenkt wird.

Die gefaltete Bahn 19 gelangt nun in den Bereich der Siegelstation 23 mit einem aufrechten Siegelaggregat 31. Die Bahn 19 wird demnach in vertikaler Ebene durch das Siegelaggregat 31 hindurchgeführt. Die Förderrichtung erstreckt sich von einer oberen Umlenkwalze 32 an der Eingangsseite des Siegelaggregats 31 abwärts bis zu einer unteren Umlenkwalze 33 an der Austrittsseite. Zwischen den Umlenkstellen wird die Bahn 19 taktweise transportiert. Mindestens während des Vorgangs des Siegelns, nämlich während des Anbringens von quergerichteten Verbindungsnähten 21, wird die Bahn weitgehend spannungsfrei und antriebslos gehalten.

Durch die untere Umlenkwalze 33 wird die Bahn 19 nach Verlassen des Siegelaggregats 31 in die entgegengesetzte Förderrichtung umgelenkt, nämlich in Aufwärtsrichtung, und war unmittelbar benachbart und parallel zum Siegelaggregat 31. Eine obere Umlenkung erfolgt durch eine Umlenkwalze 34, die zugleich Antriebswalze für die Bahn ist, und zwar insbesondere mit einem Servoantrieb. Die Umlenkwalze 34 ist etwa in Höhe des Eintritts der Bahn 19 in das Siegelaggregat 31 angeordnet.

Im Anschluss an die Umlenkwalze 34 läuft die Bahn 19 über ein weiteres, zweites Ausgleichspendel 35. Dieses gleicht die Bewegungsunterschiede der Bahn 19 im Bereich des Siegelaggregats 31 einerseits und der nachfolgenden Aggregate andererseits aus.

Es folgt die Tapestation 24. In deren Bereich wird das Tape 18, also der klebende Verschlussstreifen für den Beutel 10, an der Bahn 19 in packungsgerechter Position angebracht. In dieser Station können darüber hinaus weitere Zuschnitte an der Bahn 19 angebracht werden, zum Beispiel Druckträger (Coupons) oder sog. Sticker zum Fixieren von Beigaben wie Zigarettenpapier. Im Anschluss an diese Station folgt die Trennstation 25 mit einem Trennmesser zum Abtrennen der Beutel 10 von der Bahn 19, wobei der Trennschnitt jeweils mittig im Bereich der Verbindungsnaht 21 ausgeführt wird.

Die Beutel 10 werden einem Beutelförderer 36 übergeben, der die Beutel 10 in Fortsetzung der Hauptrichtung fördert und zur Übergabe an die Füll- und Verschließstation 27 bereit hält. Durch Übergabeorgane 37 werden jeweils mehrere, zum Beispiel vier Beutel 10 auf dem Beutelförderer 36 gleichzeitig erfasst, abgehoben und an einen Beutel-Revolver 38 übergeben. Dieser transportiert die Beutel 10 unter Drehung entlang einer Bewegungsbahn quer zur Hauptförderrichtung, wobei die Beutel 10 in aufeinanderfolgenden Stationen befüllt und verschlossen werden. Die kompletten Beutel 10 werden von einem Abförderer 39 abtransportiert.

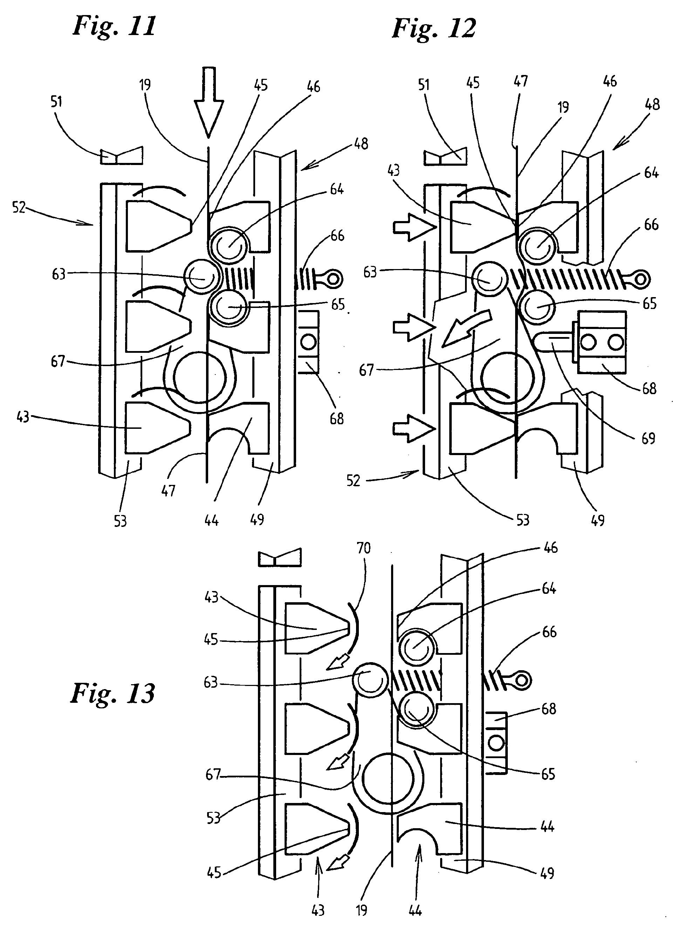

Die Siegelstation 23 bzw. das Siegelaggregat 31 ist in besonderer Weise ausgebildet. Die Bahn 19 wird im Anschluss an das als Faltweiche bzw. Faltblech ausgebildete Faltorgan 30 von einer oberhalb des Faltorgans 30 angeordneten Umlenkwalze 40 erfasst, die als Antriebswalze ausgebildet und von einem Motor, insbesondere Servomotor 41 angetrieben ist. Die Umlenkwalze 40 ist (mit dem Servomotor 41) an einer aufrechten Tragwand 42 gelagert. Eine nachfolgende Umlenkwalze 32 leitet die Bahn 19 in eine vertikale Ebene mit abwärts gerichtetem Transport zwischen Siegel- bzw. Schweißorganen, die paarweise im Bereich des Siegelaggregats 31 zu beiden Seiten der Bahn 19 positioniert sind und taktweise zusammen wirken. Bei den Schweiß- bzw. Siegelorgane handelt es sich um Siegelbacken 43 auf der einen Seite und Gegenbacken 44 auf der anderen Seite der Bahn 19. Die einander zugeordneten Backen 43, 44 sind jeweils in derselben Horizontalebene angeordnet und taktweise relativ zueinander bewegbar zwischen einer Ausgangsstellung (z. B. Fig. 11) und einer Schweiß- bzw. Siegelstellung unter Anlage an der Bahn 19 (z. B. Fig. 12). Die Siegelorgane 43, 44 sind langgestreckt bzw. steg- oder balkenförmig ausgebildet mit konvergierender Querschnittsform, sodass eine verhältnismäßig schmale Siegelfläche 45 entsteht, insbesondere in der Breite der Verbindungsnähte 21. Die Gegenbacken 44 sind mit einer etwas breiteren Gegenfläche 46 ausgebildet.

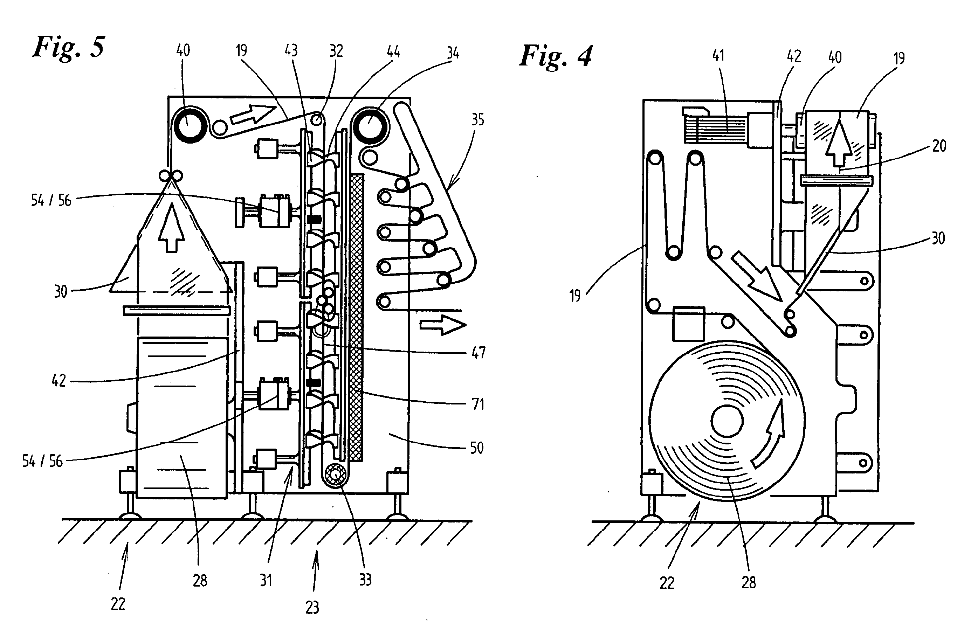

Die Anordnung und Ausbildung des Siegelaggregats 31 ermöglicht die Anordnung einer Mehrzahl von Siegelorganen im Bereich eines aufrechten Bahnabschnitts 47 der Bahn 19. Bei dem Ausführungsbeispiel gemäß Fig. 5 sind acht Siegelorgane eingerichtet bzw. acht Siegelbacken 43 mit Gegenbacken 44. In einem Arbeits- bzw. Siegeltakt können demnach acht Verbindungsnähte 21 und mithin eine entsprechende Anzahl von Beuteln 10 an der Bahn 19 definiert werden. Die Paare der Siegelbacken 43 und Gegenbacken 44 sind in einem der Abmessung eines Beutels 10 entsprechenden Abstand übereinanderliegend angeordnet. Die Siegelbacken 43 einerseits und die Gegenbacken 44 andererseits sind an gesonderten Trägem angeordnet. Die (unbeheizten) Gegenbacken 44 sind an einem gemeinsamen, über die volle Höhe durchgehenden Träger 48 angebracht, der plattenförmig ausgebildet ist. Die Gegenbacken 44 sind an Halteorganen des Trägers 48 befestigt, und zwar so, dass eine Verschiebung - nach Lösen von Verbindungsmitteln - auf dem Träger 48 möglich ist, um unterschiedliche Relativstellungen der Siegelorgane zu ermöglichen. Im vorliegenden Falle sind zwei Verbindungsschienen 49 an dem Träger 48 angebracht, die einerseits eine Führung der Gegenbacken 44 bewirken und andererseits in Verbindung mit Haltemitteln eine Fixierung an beliebiger Position ermöglichen. Der Träger 48 ist an einem nicht näher gezeigten Traggestell, insbesondere an einer aufrechten Hauptplatte 50, angebracht.

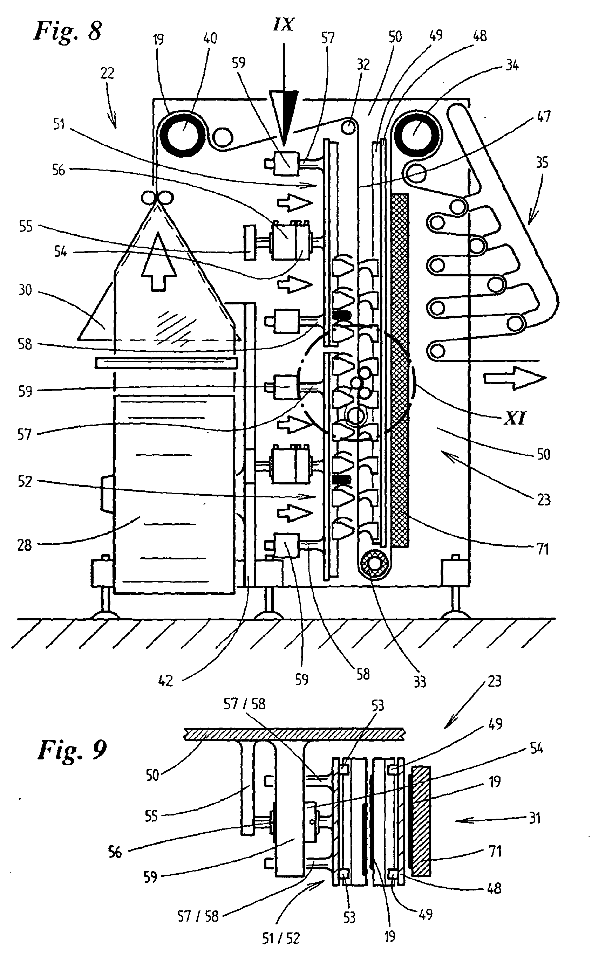

Die Siegelbacken 43 sind in ähnlicher Weise an aufrechten Tragorganen angebracht, und zwar an (zwei) Backenträgern 51, 52, die ausgerichtet in vertikaler Ebene übereinander angeordnet sind. Die Backenträger 51, 52 sind bei den gezeigten Beispielen von gleicher Größe, sodass sie geeignet sind, die gleiche Anzahl von Siegelorganen bzw. Siegelbacken 43 aufzunehmen. Bei dem Ausführungsbeispiel der Fig. 5 sind an jedem Backenträger 51, 52 vier Siegelbacken 43 angeordnet. Die einander benachbarten Siegelbacken 43 der beiden Backenträger 51, 52, also in halber Höhe des Siegelaggregats 31, sind entsprechend positioniert, damit der Abstand der Abmessung des herzustellenden Beutels 10 entspricht. Die Backenträger 51, 52 sind ebenfalls plattenförmig ausgebildet mit Verbindungsschienen 53 zur verstellbaren Fixierung der Organe. Eine Verteilung der Siegelorgane 43, 44 kann - je nach Größe der herzustellenden Beutel 10 - eine von Fig. 5 abweichende Formation aufweisen, wie beispielsweise in Fig. 8 gezeigt mit einer Mehrzahl von Siegelorganen im unteren Bereich des Siegelaggregats 31.

Das Siegelaggregat 31 ist bei den dargestellten Ausführungsbeispielen so angeordnet, dass die Gegenbacken 44 feststehend angeordnet sind. Der Träger 48 ist demnach unbeweglich. Die erforderlichen Bewegungen für die Durchführung des Siegeltaktes werden hier ausschließlich von den Siegelbacken 43 bzw. von den Backenträgern 51, 52 übernommen. Beiden Backenträgern 51, 52 sind gesonderte Betätigungsorgane zugeordnet zur Durchführung von hin- und hergehenden Querbewegungen bis zur Anlage an der Bahn 19. An jedem plattenförmigen Backenträger 51, 52 ist an der freien Rückseite ein Betätigungsorgan angebracht, nämlich ein Zylinder 54. Dieser ist für einen Hub ausgelegt, der der Bewegung der Siegelorgane zwischen einer Ausgangsstellung (Fig. 11) und einer Siegelstellung (Fig. 12) entspricht. Die Betätigungszylinder 54 greifen jeweils in halber Höhe, also mittig, an den Backenträgern 51, 52 an. Jeder Zylinder 54 ist mit einem Halter 55 verbunden, der seinerseits an einem Traggestell bzw. an der Hauptplatte 50 angebracht ist.

Das Siegelaggregat 31 ist so ausgebildet, dass die beheizten Organe, also die Siegelbacken 43 zusätzlich in eine Ruhestellung bewegt werden können mit größerem Abstand von der Bahn 19 (Fig. 13). Diese Stellung wird angesteuert, wenn eine Betriebsunterbrechung der Maschine erforderlich ist und vermieden werden soll, dass die Bahn 19 mit der von den Siegelbacken 43 ausgehenden Wärme beaufschlagt werden. Zur Durchführung dieser zusätzlichen bzw. alternativen Bewegung ist ein weiterer Betätigungszylinder vorgesehen bzw. jeder Betätigungszylinder 54 mit einem Zusatzzylinder 56 ausgestattet, der den größeren Hub der Backenträger 51, 52 bewirkt. Damit eine korrekte Parallelbewegung der Siegelbacken 43 bzw. der Backenträger 51, 52 stattfindet, sind diese mit mindestens zwei Führungsstangen 57, 58 in entsprechenden feststehenden, insbesondere an der Hauptplatte 50 angebrachten Führungen 59 abgestützt bzw. gehalten.

Die Schweiß- bzw. Siegelwerkzeuge, also die Siegelbacken 43 einerseits und Gegenbacken 44 andererseits, erstrecken sich bei dem vorliegenden Ausführungsbeispiel (Fig. 9) über die volle Breite der Tragorgane 48, 51, 52 und damit über die volle Breite der (gefalteten) Bahn 19. Die Siegelbacke 43 ist in ihrer Funktion geteilt, nämlich in einen beheizten Backenteil und einem nicht beheizten Backenteil. Diese können durch einen Luftspalt voneinander getrennt sein oder durch entsprechende Isolierung, sodass Wärme nur im Bereich des Bahnschenkels 20 auf die Bahn 19 übertragen, die Bahn 19 aber über die volle Breite durch die Organe fixiert ist. Alternativ können die Organe 43, 44 verkürzt in der Breite des Bahnschenkels 20 ausgebildet sein.

Durch die Umlenkwalzen 32 und 33 ist gewährleistet, dass die Bahn 19 in einer bestimmten Relativstellung durch das Siegelaggregat 31 hindurchgeleitet wird, nämlich unmittelbar benachbart zu den feststehenden Gegenbacken 44 (Fig. 13). Der Bahnschenkel 20 ist vorzugsweise auf der diesen Gegenbacken 44 zugekehrten Seite angeordnet, sodass die Wärme von der Rückseite der Bahn 19 her übertragen wird.

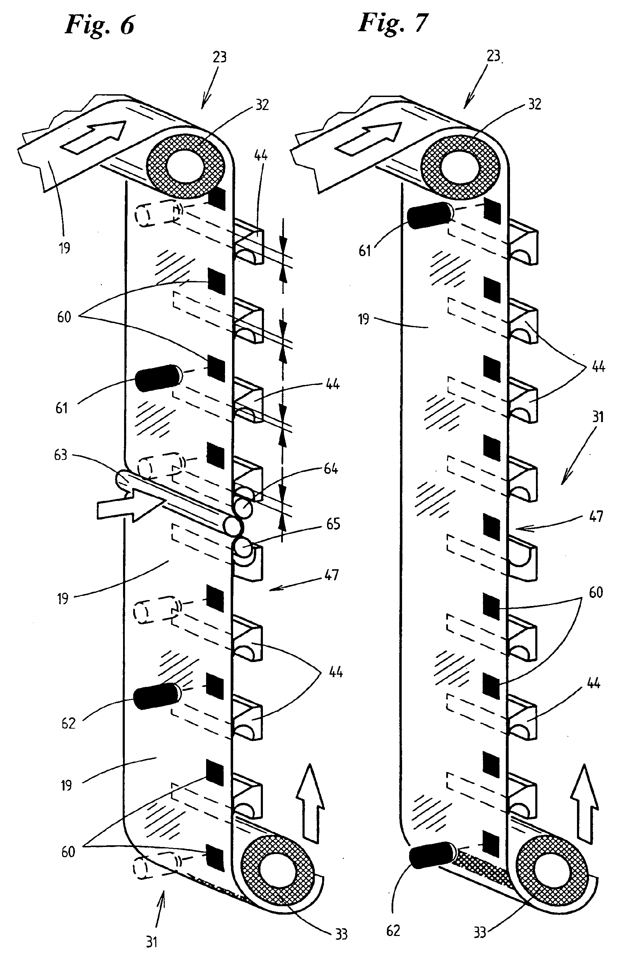

Das Siegelaggregat 31 ist mit Überwachungs- und Kontrollorganen versehen, die eine exakte Positionierung der Bahn 19 im Bereich der Schweiß- bzw. Siegelorgane gewährleisten. Es geht darum, auch bei Materialien, die gegenüber (Längs-)Spannungen empfindlich sind, eine exakte Positionierung der Verbindungsnähte 21 und damit exakte Abmessungen der Beutel 10 zu gewährleisten. Die Stellung der Bahn 19 zwischen den Umlenkwalzen 32 und 33 wird durch Sensoren überwacht. Bei dem vorliegenden Ausführungsbeispiel sind an der Bahn 19 Markierungen angebracht, hier Druckmarken 60. Diese sind in Abständen voneinander angeordnet, die den Abständen der anzubringenden Verbindungsnähte 21 entsprechen. Ortsfeste Sensoren- bzw. Druckmarkenleser 61, 62 Tasten die Druckmarken 60 ab und erkennen so die Stellung der Bahn 19. Bei dem Ausführungsbeispiel gemäß Fig. 6 sind zwei Sensoren bzw. Druckmarkenleser 60 installiert, und zwar jeweils etwa mittig zu den zwei Gruppen von Siegelbacken 43 - entsprechend den Backenträgern 51, 52. Alternativ können je Gruppe von Siegelbacken 43 zwei derartiger Druckmarkenleser 60 installiert sein, nämlich in einer durch gestrichelte Linien angedeuteten Position mit oberen und unteren Druckmarkenlesern 61, 62. Die Druckmarkenleser 61, 62 sind verstellbar, entsprechend dem Bedarf bzw. entsprechend der Vorgabe durch die Abstände der Verbindungsnähte 21. Die Druckmarken 60 sind bei der Fertigung der Folie vorgegeben und auf die jeweilige Abmessung der Beutel 10 ausgerichtet. Bei erkannten Fehlstellungen der Bahn 19 im Bereich des Bahnabschnitts 47 kann ein Ausgleich über die obere und/oder untere Umlenkwalze 32, 33 bewirkt werden, wobei diese als Antriebswalze, insbesondere mit Servoantrieb, ausgebildet sind. Die Druckmarkenleser 61, 62 sind bei dem Ausführungsbeispiel gemäß Fig. 6 so verteilt, dass jeweils mittig im Bereich der oberen vier Siegelbacken 43 bzw. Gegenbacken 44 mittig ein Sensor 61 und bei den unteren vier Backen 43, 44 ebenfalls mittig ein Sensor 62 positioniert ist, und zwar vorzugsweise mittig zwischen zwei aufeinanderfolgenden Backen 43, 44. Alternativ kann eine gestrichelt dargestellte Verteilung von vier Sensoren gewählt werden, wobei jeweils ein Sensor oben und unten im Bereich der Umlenkwalze 32, 33 positioniert und die weiteren Sensoren mit gleichen Abständen angeordnet sind. Bei der Ausführung gemäß Fig. 7, die vorzugsweise für eine Bahn mit geringer Dehnbarkeit geeignet ist, befindet sich jeweils ein Sensor 61, 62 unmittelbar unterhalb bzw. oberhalb der Umlenkwalzen 32, 33.

Das Siegelaggregat 31 kann darüber hinaus mit einem Ausgleichsorgan versehen sein, um eventuelle Ungenauigkeiten in dem Bahnabschnitt 47 aufgrund entsprechender Messungen auszugleichen. Dies gilt vor allem bei spannungsempfindlichen Materialien. Das Ausgleichsorgan besteht aus mindestens einem Ablenk- bzw. Umlenkorgan, welches die Bahn 19 zur Reduzierung der wirksamen Länge geringfügig seitlich auslenkt. Vorteilhaft ist eine quer zur Bahn 19 gerichtete Ausgleichswalze 63, die durch queraxiale Bewegung eine seitwärtsgerichtete Umlenkung der Bahn 14 bewirkt (Fig. 11). Die Ausgleichswalze 63 arbeitet vorzugsweise mit Gegenwalzen 64, 65 zusammen, die auf der gegenüberliegenden Seite der Bahn 19 feststehend gelagert sind und aufgrund der Abstände eine Auslenkung der Bahn 19 bewirken. Die bewegbare Ausgleichswalze 63 ist hier durch ein Betätigungsorgan aus der Ausgangsstellung gemäß Fig. 12, Fig. 13 - mit Abstand von der Bahn 19 - in die Auslenkstellung (Fig. 11) bewegbar. Es handelt sich dabei um eine (Zug-)Feder 66, die die Ausgleichswalze 63 ständig in die Umlenkstellung unter Anlage an den feststehenden Gegenwalzen 64, 65 belastet. Zur Durchführung der Bewegungen ist die Ausgleichswalze 63 an einem Hebel 67 angeordnet, der durch die Wirkung der Feder 66 um ein feststehendes Lager schwenkbar ist. Als gegengerichtetes Betätigungsorgan für die Ausgleichswalze 63 bzw. den Hebel 67 dient ein (pneumatischer) Zylinder 68, dessen Kolben 69 gegen den Hebel 67 ausfahrbar ist, um diesen zu verschwenken, nämlich aus der Ablenkstellung in eine zurückgezogene Stellung.

Das Ausgleichsorgan 63, 64, 65 wird vorzugsweise so eingesetzt, dass bei einem erkannten Versatz zwischen Druckmarke und Sollstellung der Bahn im Bereich der Backen 43, 44 die Ausgleichswalze 63 in die Ablenkstellung gemäß Fig. 11 bewegt wird. In Fig. 6 ist der Fall gezeigt, dass die Abstände der Druckmarken voneinander (geringfügig) größer ist als die Abstände der herzustellenden Verbindungsnähte 21. Durch das Ausgleichsorgan 63 wird eine Korrektur der Relativstellung der Bahn 19 im Bereich der unteren (vier) Backen 43, 44 bewegt, da bei Stillstand der Bahn 19 der untere Teilbereich geringfügig aufwärtsbewegt wird. Dadurch werden die Stellungsdifferenzen beseitigt. Im oberen Teil sind die Abweichungen geringer und werden in der dargestellten geringen Größe hingenommen.

Die Einzelheiten gemäß Fig. 11 bis Fig. 13 zeigen eine weitere Besonderheit. Um die Bahn 19 vor Wärmeeinflüssen bei längerem Stillstand bzw. Betriebsunterbrechung zu schützen, werden in der entsprechend zurückgezogenen Stellung der Siegelbacken 43 (Fig. 13) Schutzschilde 70 vor die Siegelbacken 43 bewegt, nämlich auf der der Bahn 19 zugekehrten Seite. Die Schutzschilde 70 sind gewölbte Formstücke aus wärmeabweisendem Werkstoff. Die Schutzschilde 70 sind seitlich schwenkbar gelagert und können aufgrund eines entsprechenden Steuersignals in die Schutzstellung gemäß Fig. 13 oder zurück in die Ausgangsstellung gemäß Fig. 11, Fig. 12 neben bzw. oberhalb der Siegelbacken 44 bewegt werden.

Als weitere Maßnahme für die qualitative Verbesserung der Beutel 10 bzw. der Verbindungsnähte 21 ist eine Kühlung der Bahn 19 im Anschluss an die Siegelung der Verbindungsnähte 21 vorgesehen. Gemäß Fig. 5 ist die untere Umlenkwalze 33 für die Bahn 19 als Kühtwalze ausgebildet, insbesondere in der Ausführung mit einem durch die hohle Walze hindurchströmenden Kühlmedium (Luft, Flüssigkeit). Zusätzlich oder alternativ kann unmittelbar im Anschluss an das Siegelaggregat 31 ein Kühlorgan für die Bahn 19 installiert sein. Gemäß Fig. 5 ist an der Rückseite des Siegelaggregats 31 eine aufrechte Kühlplatte 71 angeordnet. Auch diese kann von einem Kühlmedium durchströmt oder in anderer Weise ausgebildet sein. Die Kühlplatte 71 befindet sich hier in geringem Abstand von und parallel zur Trägerplatte 48. Die Bahn 19 wird durch einen aufrechten Spalt zwischen Siegelaggregat 31 und Kühlplatte 71 in Aufwärtsrichtung transportiert.

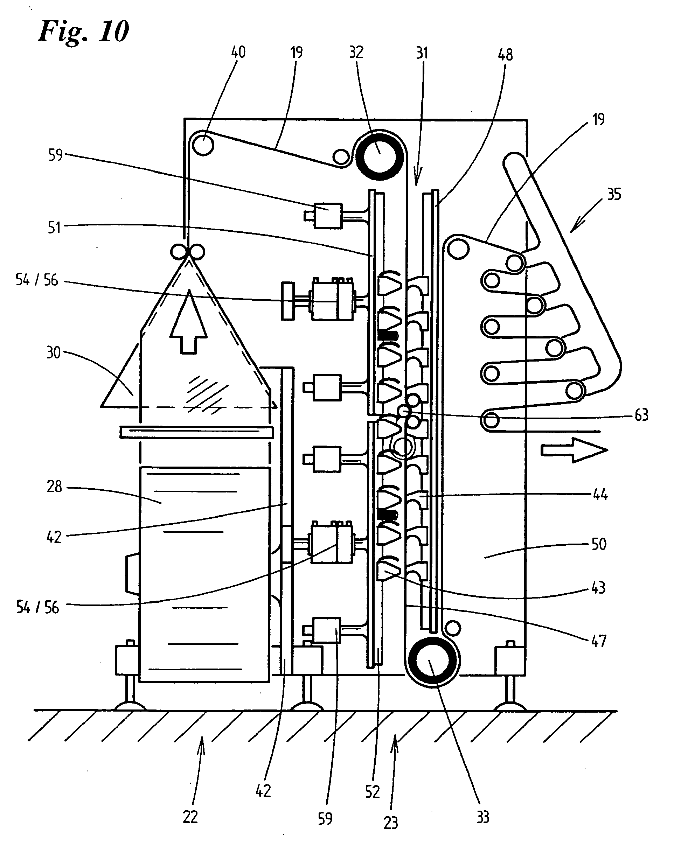

Wenn bei bestimmten Materialien für die Herstellung der Beutel 10 auf eine Kühlung verzichtet werden kann und eine besonders kompakte Bauweise erwünscht ist, sind die obere und untere Umlenkwalze 32 und 33 unmittelbar als (durch Servomotor angetriebene) Antriebswalzen ausgebildet, wobei die sonst versetzt angeordneten oberen und unteren Antriebswalzen (Fig. 5) entfallen können. Stattdessen wird die Bahn 19 bei dem Ausführungsbeispiel der Fig. 10 im Anschluss an die Folienstation 22 bzw. an das Faltorgan 30 über eine einfache Umlenkwalze geführt. Gleichermaßen ist dem Ausgleichspendel 35 im Anschluss an das Siegelaggregat 31 ebenfalls eine einfache Umlenkwalze 34 zugeordnet. Auch auf die in Fig. 8 gezeigte Kühlplatte 71 kann bei dieser einfacheren Lösung verzichtet werden.

### Bezugszeichenliste:

- 10: Beutel
- 11: Tasche
- 12: Taschen-Vorderwand
- 13: Taschen-Rückwand
- 14: Seitennaht
- 15: Seitennaht
- 16: Öffnung
- 17: Wickellasche
- 18: Tape
- 19: Bahn
- 20: Bahnschenkel
- 21: Verbindungsnaht
- 22: Folienstation
- 23: Siegelstation
- 24: Tapestation
- 25: Trennstation
- 26: Übergabestation
- 27: Füll- und Verschließstation
- 28: Bobine
- 29: Ausgleichspendel
- 30: Faltorgan
- 31: Siegelaggregat
- 32: Umlenkwalze
- 33: Umlenkwalze
- 34: Umlenkwalze
- 35: Ausgleichspendel
- 36: Beutelförderer
- 37: Übergabeorgan
- 38: Beutel-Revolver
- 39: Abförderer
- 40: Umlenkwalze
- 41: Servomotor
- 42: Tragwand
- 43: Siegelbacke
- 44: Gegenbacke
- 45: Siegelfläche
- 46: Gegenfläche
- 47: Bahnabschnitt
- 48: Träger
- 49: Verbindungsschiene
- 50: Hauptplatte
- 51: Backenträger
- 52: Backenträger
- 53: Verbindungsschiene
- 54: Betätigungszylinder
- 55: Halter
- 56: Zusatzzylinder
- 57: Führungsstange
- 58: Führungsstange
- 59: Führung
- 60: Druckmarken
- 61: Druckmarkenleser
- 62: Druckmarkenleser
- 63: Ausgleichswalze
- 64: Gegenwalze
- 65: Gegenwalze
- 66: Feder
- 67: Hebel
- 68: Zylinder
- 69: Kolben
- 70: Schutzschild
- 71: Kühlplatte

## Patentansprüche

1. Vorrichtung zum Herstellen von Tabak-Beuteln (10) aus Folie mit einer durch Umfalten gebildeten und durch Seitennähte (14, 15) begrenzten Tasche (11) mit einer Öffnung (16), wobei eine Folien-Bahn (19) durch ein ortsfestes Faltorgan (30) in Längsrichtung fortlaufend unter Bildung eines Bahnschenkels (20) umfaltbar, quergerichtete Verbindungsnähte (21) an dem Bahnschenkel (20) im Bereich eines Siegelaggregats (31) herstellbar und schließlich im Bereich einer Trennstation (25) die Beutel (10) durch quergerichteten Trennschnitt im Bereich der Verbindungsnähte (21) von der Bahn (19) abtrennbar sind, **gekennzeichnet durch** folgende Merkmale:
a) die einen fortlaufenden Bahnschenkel (20) aufweisende Folien-Batln (19) ist über eine obere Umlenkwalze (32) in Abwärtsrichtung umlenkbar in den Bereich eines aufrechten Siegelaggregats (13),
b) das Siegelaggregat (13) umfasst eine Mehrzahl von übereinander angeordneten, quergerichteten Siegelorganen bzw. Siegelbacken (43) und Gegenbacken (44),
c) während einer Stillstandsphase der Folien-Bahn (19) sind die Siegelbacken (43) bzw. Gegenbacken (44) bis zur Anlage an der Folten-Bahn (19), nämlich an einem aufrechten Bahnabschnitt (47), bewegbar, derart, dass gleichzeitig eine der Anzahl der Siegelbacken (43) und Gegenbacken (44) entsprechende Anzahl von quergerichteten Siegelnähten (21) herstellbar ist,
d) die Siegelbacken (43) und Gegenbacken (44) sind nach Anbringen der Siegelnähte (21) gemeinsam bzw. gleichzeitig auseinander bewegbar und die Siegel-Bahn (19) ist um einen der Anzahl der hergestellten Siegelnähte (21) entsprechenden Abschnitt in Abwärtsrichtung weitertranaportierbar,
e) die Folien-Bahn (19) ist am unteren Ende des Siegelaggregats (31) über eine Umlenkwalze (33) geführt und über weitere Umlenkwalzen (34) in horizontaler Ebene einer Trennstation (25) zuführbar,
f) in der Trennstation (25) sind Beutel (10) von der in horizontaler Ebene geförderten Folienbahn (19) abtrennbar und auf einem Beutelförderer (36) ablegbar.

2. Vorrichtung nach Anspruch 1, **dadurch gekennzeichnet, dass** die beheizten Siegelbacken (43) gegen feststehende Gegenbacken (44) bzw. gegen die Follen-Bahn (19) bewegbar sind unter Andrücken an die Gegenbacken (44).

3. Vorrichtung nach Anspruch 1 oder 2, **dadurch gekennzeichnet, dass** die Siegelbacke (43) einerseits und/oder die Gegenbacken (44) andererseits jeweils an aufrechten Tragorganen verstellbar angebracht sind, insbesondere die Gegenbacken (44) an einem Träger (48) und die Siegelbacken (43) an Backenträgern (51, 52), wobei zur Betätigung der Siegelorgane die Tragorgane bzw. ein Tragorgan mit den an diesem angebrachten Siegelorganen in Horizontalrichtung hin- und herbewegbar ist.

4. Vorrichtung nach Anspruch 3, **dadurch gekennzeichnet, dass** die plattenförmig ausgebildeten Tragorgane, nämlich Träger (48) und Backenträger (51, 52), zwei im Abstand voneinander angeordnete Verbindungschienen (49, 53) aufweisen, an denen die Siegelorgane (43, 44) lösbar und verschiebbar befestigt sind.

5. Vorrichtung nach Anspruch 3 oder 4, **dadurch** gekennzeichet, dass die Siegelbacken (43) an mehreren, insbesondere zwei übereinander angeordneten und in derselben Ebene ausgerichteten Backenträgem (51, 52) angebracht sind, wobei jeder Backenträger (51, 52) durch ein horizontales Betätigungsorgan, vorzugsweise durch einen Betätigungszylinder (54) quer bewegbar ist, insbesondere in Verbindung mit einem Zusatzzylinder (58) zur Bewegung der Backenträger (51, 52) in eine zurückgezogene, von der Bahn (19) beabstandete Ruhestellung.

6. Vorrichtung nach Anspruch 1 oder einem der weiteren Ansprüche, **dadurch gekennzeichnet, dass** im Bereich des Siegelaggregats (31) Kühlmittel angeordnet sind zum Kühlen der Bahn (19) nach Anbringung der Verbindungsnähte (21), vorzugsweise eine gekühlte (untere) Umlenkwalze (33) und/oder eine sich in Bewegungsrichtung der Bahn (19) erstreckende Kühlplatte (71) unmittelbar im Anschluss an das Siegelaggregat (31) und in aufrechter Anordnung an der freien (Rück-)Seite des Siegelaggregats (31).

7. Vorrichtung nach Anspruch 1 oder einem der weiteren Ansprüche, **dadurch gekennzeichnet, dass** den beheizten Siegelbacken (43) bewegbare Abschirmorgane zugeordnet sind, die in eine Position zwischen Siegelbacken (43) und der Bahn (19) bewegbar sind zur Verhinderung bzw. Reduzierung der Übertragung von unerwünschter Wärme auf die Bahn (19), vorzugsweise gewölbte, schwenkbare Schutzschilde (70) für jede Siegelbacke (43).

8. Vorrichtung nach Anspruch 1 oder einem der weiteren Ansprüche, **dadurch gekennzeichnet, dass** im Bereich des Siegelaggregats (13) Druckmarkenleser (61, 62) angeordnet sind zum Ertasten von Druckmarken (60) an der Bahn (19), wobei mindestens zwei Druckmarkenleser (61, 62) mit etwa gleichen Abständen von der oberen Umlenkwalze (32) und der unteren Umlenkwalze (33) angeordnet sind.

9. Vorrichtung nach Anspruch 1 oder einem der weiteren Ansprüche, **dadurch gekennzeichnet, dass** im Bereich des Siegelaggregats (31), insbesondere auf halber Höhe zwischen benachbarten, übereinander angeordneten Siegelorganen, ein Ausgleichsorgan angeordnet ist zum Kompensieren von Fehlstellungen der Bahn (19) im Bereich des Siegelaggregats (31), nämlich eine Ausglelchswalze (63), die quer zur Bahn (19) bewegbar ist zur Erhöhung der Bahnspannung bzw. zum Auslenken der Bahn (19), wobei die Ausgleichwalze (63) in die Ausgleichstellung an der Bahn (19) und danach die Siegelorgane bzw. Siegelbacken (43) in die Siegelstellung unter Anlage an der Bahn (19) bewegbar sind, und wobei der bewegbaren Ausgleichswalze (63) zwei mit Abstand voneinander angeordnete, feststehende Gegenwalzen (64, 65) auf der gegenüberliegenden Seite der Bahn (19) zugeordnet sind.

## Claims

1. Apparatus for producing tobacco bags (10) from sheet material having a pocket (11) formed by folding and delimited by side seams (14, 15) and with an opening (16), it being the case that a sheet-material web (19) can be folded over continuously in the longitudinal direction to form a web leg (20) by a stationary folding device (30), transversely directed connecting seams (21) can be produced on the web leg (20) in the region of a sealing subassembly (31) and, finally, in the region of a severing station (25), the bags (10) can be severed from the web (19) by a transversely directed severing cut in the region of the connecting seams (21), **characterized by** the following features:
a) the sheet material web (19) having a continuous web leg (20) can be deflected in the downward direction by a top deflecting roller (32) into the region of an upright sealing subassembly (13),
b) the sealing subassembly (13) comprises a plurality of transversely directed sealing devices or sealing jaws (43) and abutment jaws (44), which are arranged one above the other,
c) during a standstill phase of the sheet material web (19), the sealing jaws (43) and abutment jaws (44) can be displaced, namely on an upright web portion (47), until they butt against the sheet material web (19) such that a number of transverse connecting seams (21) corresponding to the number of sealing jaws (43) and abutment jaws (44) can be produced simultaneously,
d) after the connecting seams (21) have been applied, the sealing jaws (43) and the abutment jaws (44) can be moved apart from one another in common or simultaneously and the sealing web (19) can be transported further in the downward direction by a portion corresponding to the number of produced sealing seams (21),
e) the sheet material web (19) is guided over a deflecting roller (33) at the lower end of the sealing subassembly (31) and can be fed to a severing station (25) via further deflecting rollers (34) in the horizontal plane.
f) in the severing station (25), bags (10) can be severed from the sheet material web, which is (19) conveyed in the horizontal plane, and deposited on a bag conveyor (36).

2. Apparatus according to claim 1, **characterized in that**, the heated sealing jaws (43) can be moved against stationary abutment jaws (44) or against the sheet material web (19) through pressure exerted on the abutment jaws (44).

3. Apparatus according to claim 1 or 2, **characterized in that** the sealing jaws (43), on the one hand, and/or the abutment jaws (44), on the other hand, are provided in an adjustable manner in each case on upright carrying devices, in particular on a carrier (48) for the abutment jaws (44) and on jaw carriers (51, 52) for the sealing jaws (43), it being possible, for the purpose of actuating the sealing devices, for the carrying devices, or a carrying device with the sealing devices provided thereon, to be moved back and forth in the horizontal direction.

4. Apparatus according to claim 3, **characterized in that** the plate-shaped carrying devices, namely carriers (48) and jaw carriers (51, 52), have two spaced-apart connecting rails (49, 53) to which the sealing devices (43, 44) are attached in a releasable and displaceable manner.

5. Apparatus according to claim 3 or 4, **characterized in that** the sealing jaws (43) are provided on a plurality of, in particular on two, jaw carriers (51, 52) which are arranged one above the other and are aligned in the same plane, it being possible for each jaw carrier (51, 52) to be moved transversely by a horizontal actuating device, preferably by an actuating cylinder (54), in particular in conjunction with an additional cylinder (56) for moving the jaw carriers (51, 52) into a retracted rest position, in which they are spaced apart from the web (19).

6. Apparatus according to claim 1 or one of the further claims, **characterized in that** arranged in the region of the sealing subassembly (31) are cooling means for cooling the web (19) once the connecting seams (21) have been provided, preferably a cooled (bottom) deflecting roller (33) and/or a cooling plate (71) extending in the movement direction of the web (19) immediately following the sealing subassembly (31) and arranged in an upright manner on the free (rear) side of the sealing subassembly (31).

7. Apparatus according to claim 1 or one of the further claims, **characterized in that** the heated sealing jaws (43) are assigned moveable shielding devices which can be moved into a position between sealing jaws (43) and the web (19) in order to prevent or reduce the transmission of undesired heat to the web (19), preferably curved, pivotable protective shields (70) for each sealing jaw (43).

8. Apparatus according to claim 1 or one of the further claims, **characterized in that** arranged in the region of the sealing subassembly (31) are printed-mark readers (61, 62) for sensing printed marks (60) on the web (19), with at least two printed-mark readers (61, 62) being installed at approximately equal spacings from the top deflecting roller (32) and the bottom deflecting roller (33).

9. Apparatus according to claim 1 or one of the further claims, **characterized in that** a compensating device is arranged in the region of the sealing subassembly (31), in particular half-way up between adjacent sealing devices arranged one above the other, in order to compensate for incorrect positioning of the web (19) in the region of the sealing subassembly (31), namely a compensating roller (63) which can be moved transversely to the web (19) in order to increase the web tensioning and/or to deflect the web (19), it being possible for the compensating roller (63) to be moved into the compensating position on the web (19) and then for the sealing devices or sealing jaws (43) to be moved into the sealing position with abutment against the web (19), and with the moveable compensating roller (63) being assigned two spaced-apart, fixed abutment rollers (64, 65) on the opposite side of the web (19).

## Revendications

1. Dispositif pour la fabrication de sachets de tabac (10) en film constitués d'une poche (11) formée par pliage et limitée par des joints latéraux (14, 15), avec une ouverture (16), une bande de film (19), une bande de film (19) pouvant être repliée par un organe de pliage fixe (30) en continu dans la direction longitudinale en formant un volet de bande (20), des joints de connexion orientés transversalement (21) pouvant être créés au niveau du volet de bande (20) dans la région d'un appareil de scellage (31), et finalement, dans la région d'un poste de séparation (25), les sachets (10) pouvant être séparés de la bande (19) par une découpe de séparation dans la direction transversale dans la région des joints de connexion (21), **caractérisé par** les caractéristiques suivantes :
a) la bande de film (19) présentant un volet de bande continu (20) peut être déviée dans la direction descendante par le biais d'un rouleau de déviation supérieur (32) dans la région d'un appareil de scellage (31) vertical,
b) l'appareil de scellage (13) comprend une pluralité d'organes de scellage ou de mâchoires de scellage (43) et de mâchoires conjuguées (44) disposés les uns au-dessus des autres et orientés transversalement,
c) pendant une phase d'arrêt de la bande de film (19), les mâchoires de scellage (43) ou les mâchoires conjuguées (44) peuvent être déplacées jusqu'à venir en butée contre la bande de film (19), à savoir contre une portion verticale (47) de la bande, de telle sorte que, simultanément, une pluralité de joints de scellage orientés transversalement (21), correspondant à la pluralité de mâchoires de scellage (43) et de mâchoires conjuguées (44) puisse être créée,
d) les mâchoires de scellage (43) et les mâchoires conjuguées (44), après l'application des joints de scellage (21), peuvent être écartées l'une de l'autre, ensemble ou simultanément, et la bande scellée (19) peut être transportée dans la direction descendante sur une portion correspondant au nombre des joints de stellage créés (21),
e) la bande de film (19) est guidée à l'extrémité inférieure de l'appareil de scellage (31) sur un rouleau de déviation (33) et peut être acheminée par le biais d'autres rouleaux de déviation (34) dans le plan horizontal d'un poste de séparation (25), et
f) dans le poste de séparation (25), des sachets (10) peuvent être séparés de la bande de film (19) transportée dans le plan horizontal et peuvent être déposés sur un transporteur de sachets (36).

2. Dispositif selon la revendication 1, **caractérisé en ce que** les mâchoires de scellage chauffées (43) peuvent être déplacées contre des mâchoires conjuguées fixes (44) ou contre la bande de film (19) en pressant contre les mâchoires conjuguées (44).

3. Dispositif selon la revendication 1 ou 2, **caractérisé en ce que** les mâchoires de scellage (43) d'une part, et/ou les mâchoires conjuguées (44) d'autre part sont montées de manière réglable à chaque fois sur des organes porteurs verticaux, notamment les mâchoires conjuguées (44) sont montées sur un support (48) et les mâchoires de scellage (43) sur des supports de mâchoires (51, 52), les organes porteurs ou un organe porteur avec les organes de scellage montés sur celui-ci, pouvant être déplacées d'avant en arrière pour l'actionnement des organes de scellage.

4. Dispositif selon la revendication 3, **caractérisé en ce que** les organes porteurs réalisés en forme de plaque, à savoir le support (48) et les supports de mâchoires (51, 52), présentent deux rails de liaison (49, 53) disposés à distance l'un de l'autre, sur lesquels sont fixés les organes de scellage (43, 44), de manière amovible et déplaçable.

5. Dispositif selon la revendication 3 ou 4, **caractérisé en ce que** les mâchoires de scellage (43) sont montées sur plusieurs supports de mâchoires (51, 52), notamment deux, disposés l'un au-dessus de l'autre, et orientés dans le même plan, chaque support de mâchoire (51, 52) pouvant être déplacé transversalement par un organe d'actionnement horizontal, de préférence par un cylindre d'actionnement (54), notamment en liaison avec un cylindre supplémentaire (58) pour le déplacement des supports de mâchoires (51, 52) dans une position de repos en retrait, espacée de la bande (19).

6. Dispositif selon la revendication 1 ou l'une quelconque des autres revendications, **caractérisé en ce que** dans la région de l'appareil de scellage (31) sont disposés des moyens de refroidissement pour refroidir la bande (19) après l'application des joints de connexion (21), de préférence un rouleau de déviation refroidi (inférieur) (33) et/ou une plaque de refroidissement (71) s'étendant dans la direction de déplacement de la bande (19), immédiatement à la suite de l'appareil de scellage (31) et suivant un agencement vertical sur le côté (arrière) libre de l'appareil de scellage (31).

7. Dispositif selon la revendication 1 ou l'une quelconque des autres revendications, **caractérisé en ce que** l'on associe aux mâchoires de scellage chauffées (43) des organes de protection déplaçables qui peuvent être déplacés dans une position entre les mâchoires de scellage (43) et la bande (19) pour empêcher ou réduire le transfert indésirable de chaleur à la bande (19), de préférence des panneaux protecteur (70) pivotants, de préférence cintrés, pour chaque mâchoire de scellage (43).

8. Dispositif selon la revendication 1 ou l'une quelconque des autres revendications, **caractérisé en ce que** dans la région de l'appareil de scellage (13) sont disposés des lecteurs de marques d'impression (61, 62) pour détecter des marques d'impression (60) sur la bande (19), au moins deux lecteurs de marques d'impression (61, 62) étant disposés approximativement à égale distance du rouleau de déviation supérieur (32) et du rouleau de déviation intérieur (33).

9. Dispositif selon la revendication 1 ou l'une quelconque des autres revendications, **caractérisé en ce que** dans la région de l'appareil de scellage (31), en particulier à mi-hauteur entre des organes de scellage adjacents disposés l'un au-dessus de l'autre, est disposé un organe de compensation pour compenser des erreurs de positionnement de la bande (19) dans la région de l'appareil de scellage (31), à savoir un rouleau de compensation (63) qui peut être déplacé transversalement à la bande (19) pour augmenter la tension de la bande ou pour dévier la bande (19), le rouleau de compensation (63) pouvant être déplacé dans la position de compensation contre la bande (19) et ensuite les organes de scellage ou les mâchoires de scellage (43) pouvant être déplacés dans la position de scellage en s'appliquant contre la bande (19), le rouleau de compensation déplaçable (63) étant associé à deux rouleaux conjugués (64, 65) fixes, disposés à distance l'un de l'autre, du côté opposé de la bande (19).
